# EUROPÄISCHE PATENTSCHRIFT

(11) **EP 1 044 660 B1**
(45) Veröffentlichungstag und Bekanntmachung des Hinweises auf die Patenterteilung: **06.06.2007**
(21) Anmeldenummer: 00104606.9
(22) Anmeldetag: 03.03.2000
(51) Int. Cl.: A61C 17/20, A61C 1/07, A61C 1/00, B06B 1/02, B06B 1/06

(54) **Einrichtung zur Erzeugung vorzugsweise hochfrequenter mechanischer Schwingungen für ein dentales Handstück**
Device for producing mechanical vibrations of high frequency for a dental handpiece
Dispositif destiné à la formation de vibrations mécaniques à haute fréquence pour une pièce à main dentaire

(30) Priorität: 11.04.1999 DE 19916161
(43) Veröffentlichungstag der Anmeldung: 18.10.2000
(73) Patentinhaber: Dürr Dental GmbH & Co. KG, 74321 Bietigheim-Bissingen (DE); Hahn, Rainer, Dr., 72074 Tübingen (DE)
(72) Erfinder: Hahn, Rainer, Dr., 72074 Tübingen (DE); Grotz, Uwe, 74369 Löchgau (DE)
(74) Vertreter: Ostertag, Reinhard

(56) Entgegenhaltungen:
- US-A- 4 184 092
- US-A- 4 371 816
- US-A- 4 689 515

## Beschreibung

Die Erfindung betrifft eine dentale Einrichtung zur Erzeugung vorzugsweise hochfrequenter mechanischer Schwingungen für ein dentales Handstück gemäß dem Oberbegriff des Anspruches 1.

Unter Hochfrequenz wird in der vorliegenden Beschreibung und den Ansprüchen eine im Ultraschallbereich liegende Frequenz verstqnden. Die Erfindung ist aber auch im hörbaren Frequenzbereich und im Infraschallbereich verwendbar

Beim Einsatz von dentalen Handstücken, die ein mit hoher mechanischer Frequenz angetriebenes Werkzeug aufweisen, ist die Belastung der die hochfrequenten mechanischen Schwingungen erzeugende Einrichtung stark abhängig von der Bedämpfung des Werkzeuges durch das jeweils bearbeitete Gewebe. Diese Belastungen hängen von der komplexen Kontaktgeometrie zwischen Werkzeug und Gewebeoberfläche ebenso ab wie von dem Druck, mit welchem das Werkzeug durch den Zahnarzt gegen das zu bearbeitende Gewebe gedrückt wird. Arbeitet das Handstück mit einer zwischen dem Werkzeug und der Gewebeoberfläche wirkenden Koppelflüssigkeit, hängt die Belastung der Einrichtung zur Schwingungserzeugung auch davon ab, ob und wieviel Koppelflüssigkeit zugeführt wird.

Um einen für die Praxis brauchbaren Wirkungsgrad des Ultraschall-Handgerätes zu gewährleisten, muß der Zahnarzt den Anpreßdruck des Werkzeuges (und damit des Handstückes) variieren. Dabei verfügt er letztlich nur über eine weniger präzise taktile Rückmeldung, da die hohen Frequenzen, mit denen das Werkzeug mechanisch in Schwingung versetzt wird, nicht oder nicht mit der gewünschten Genauigkeit vom menschlichen Ohr wahrgenommen werden.

Auch kann der Zahnarzt auf rasche Lastwechsel nicht so kurzfristig reagieren, daß das Auftreten so hoher Schwingungsamplituden, welche zu Beschädigungen des Handstückes oder des Werkzeuges führen, mit Sicherheit ausgeschlossen sind, oder es besteht die Gefahr, daß für den Zahnarzt unbemerkt oder unmerklich die Schwingung abnimmt oder zusammenbricht und damit die Behandlungswirkung abnimmt oder entfällt.

In der US-A-4 184 092 ist ein dentales Ultraschall-Behandlungsgerät beschrieben, dessen Schwingungserzeuger über eine Leistungsstufe durch einen Oszillator betrieben wird. Durch Überwachung der Pegeländerungen, die am Kollektorwiderstrand eines die Leistungsstufe bildenden Schalttransistors auftreten, wird eine Signalweiche gesteuert, über welche zwei Speicher mit den Frequenzen beaufschlagt werden, die beim freien Schwingen des Schwingungserzeugers bzw. beim Schwingen des Schwingungserzeugers unter Last erhalten werden. Die beiden Speicherinhalte werden miteinander verglichen, und wenn die festgestellte Frequenzdifferenz größer ist als ein vorgegebener Grenzwert wird der Oszillator abgestellt und damit auch der Schwingungserzeuger abgeschaltet.

Ein ähnliches Ultraschall-Behandlungsgerät ist in der US-A-4 689 515 beschreiben, wobei aber zwei verkettete Speicher vorgesehen sind, die mit zwei Werten des Speisestromes für den Schwingungserzeuger gefüllt sind, welche zu aufeinander folgenden Zeitpunkten gewonnen wurden.

In der US-A-4 371 816 ist ferner ein dentales Ultraschall-Behandlungsgerät beschrieben, bei dem die Erkennung von Überlastbedingungen am Werkzeug über die Amplitude oder die Phasenlage des Speisesstromes für den Schwingungserzeuger gemessen wird.

Durch die vorliegende Erfindung soll eine Einrichtung zur Erzeugung hochfrequenter mechanischer Schwingungen für ein dentales Handstück so weitergebildet werden, daß eine zuverlässige automatische Begrenzung der Schwingungsamplitude gewährleistet ist.

Diese Aufgabe ist erfindungsgemäß gelöst durch eine Einrichtung mit den im Anspruch 1 angegebenen Merkmalen.

Es wurde herausgefunden, daß bei den im dentalen Bereich verwendeten Schwingungserzeugungs-Einrichtungen, die üblicherweise im Ultraschallbereich arbeiten, der dem eigentlichen Schwingungserzeuger (in der Regel ein Stapel aus piezoelektrischen Scheiben) zugeführte Speisestrom ein gutes Maß für die momentane Amplitude der abgegebenen Schwingung ist. Bei der erfindungsgemäßen Einrichtung wird dieser Speisestrom als Ist-Wert für eine Amplitudenregelung verwendet, die nicht nur unzulässig hohe Amplituden vermeidet, sondern auch während des Arbeitens unter veränderlicher Belastung eine konstante Amplitude des Schwingungserzeugers und damit auch des Werkzeuges gewährleistet.

Vorteilhafte Weiterbildungen der Erfindung sind in Unteransprüchen angegeben.

Gemäß Anspruch 2 erhält man eine präzise Regelung der Amplitude durch geringfügig Änderungen der Frequenz des Oszillators. Man hat also eine steile Regelkennlinie.

Die Weiterbildung der Erfindung gemäß Anspruch 3 gestattet auch die Amplitudenregelung auf besonders einfache Weise über ein Steuersignal, mit welchem die Steuerklemme eines steuerbaren Oszillators beaufschlagt ist. Man macht bei dieser Art des Vorgehens davon Gebrauch, daß ein auf einer Flanke der Resonanzkurve des Gesamtsystems, welches durch die Betriebsschaltung, den Schwingungserzeuger, das Werkzeug und die Last vorgegeben ist, jede Frequenzänderung zu einer Amplitudenänderung führt, genauer gesagt eine Frequenzänderung in Richtung zum Maximum der Resonanzkurve einer Erhöhung der Amplitude mit sich bringt, eine Frequenzänderung in der anderen Richtung zu einer Amplitudenverkleinerung führt. Steuerbare Oszillatoren sind auch als preiswerte und zuverlässige Bauteile erhältlich.

Die Weiterbildung der Erfindung gemäß Anspruch 3 ist im Hinblick auf ein rasches Nachführen der Ist-Amplitude an die Soll-Amplitude von Vorteil. Auf diese Weise können übermäßige mechanische Belastungen der zwischen dem Schwingungserzeuger und dem Werkzeug liegenden Teile der Einrichtung vermieden werden, die zu Materialbrüchen führen können.

Die rasche Begrenzung des dem Schwingungserzeuger zugeführten Speisestromes läßt sich gemäß Anspruch 4 auf besonders einfache Weise realisieren, wobei die Strombegrenzung bzw. eine Stromunterbrechung unmittelbar vor dem Schwingungserzeuger erfolgt, so daß Trägheiten elektronischer Logikkreise und Leistungsstufen keine Rolle spielen.

Die im Anspruch 5 angegebene Art und Weise der Realisierung der Strombegrenzung ist bei ordnungsgemäßem Arbeiten der Einrichtung verlustarm.

Auch die Weiterbildung der Erfindung gemäß Anspruch 6 dient der unverzüglichen Reduzierung zu großen Speisestromes für den Schwingungserreger. Die Variante gemäß Anspruch 6 hat den Vorteil, daß die Strombegrenzung über das Steuersignal für den Oszillator leistungsarm erfolgt, kein für höhere Ströme ausgelegter Strombegrenzungskreis notwendig ist.

Nachdem durch die vorliegende Erfindung mechanische Überlastungen des Schwingungserzeugers und der durch diese getriebenen Teile sich auch bei wechselnden Lastbedingungen vermieden werden, kann man die mittlere Amplitude, mit der gearbeitet wird, auch höher wählen (keine wechselnden Lastbedingungen Rechnung tragende Sicherheitsmarge mit notwendig).

Nachstehend wird die Erfindung anhand von Ausführungsbeispielen unter Bezugnahme auf die Zeichnung näher erläutert. In dieser zeigen:
- Figur 1:: Eine schematische Darstellung der elektro-mechanischen Teile eines dentalen Ultraschall-Handstückes sowie einer Betriebsschaltung hierfür;
- Figur 2:: Eine ähnliche Darstellung wie Figur 1, in welcher jedoch eine abgewandelte Betriebsschaltung wiedergegeben ist; und
- Figur 3:: Eine graphische Darstellung der Resonanzkurve des schwingungsfähigen Gesamtsystems, welches durch das Ultraschall-Handstück und seine Betriebsschaltung gebildet ist.

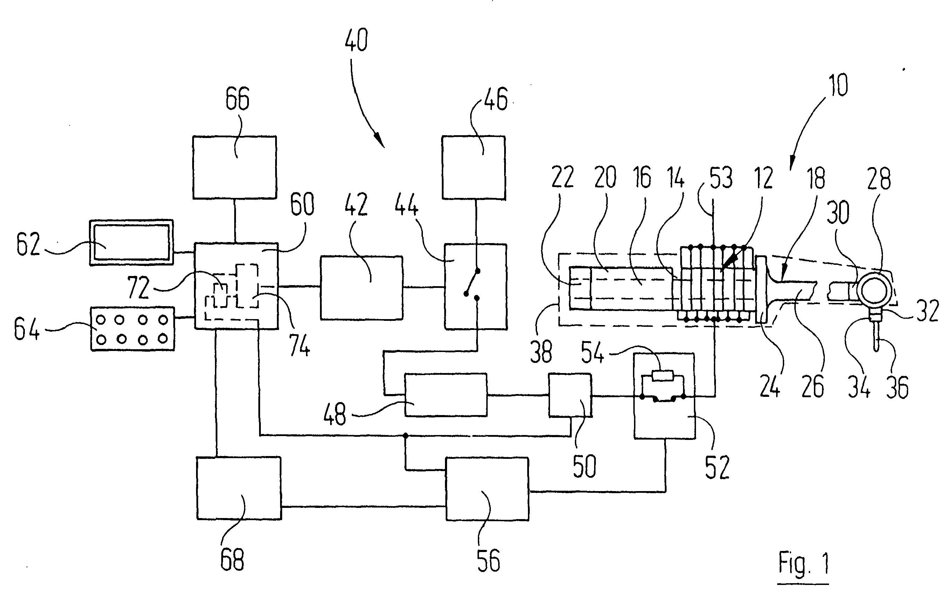

In Figur 1 ist mit 10 insgesamt ein dentales Ultraschall-Handstück bezeichnet.

Es umfaßt einen Stapel 12 aus piezoelektrischen Scheiben 14, welcher auf einen hinteren Schaftabschnitt 16 einer ingesamt mit 18 bezeichneten Sonotrode unter Vorspannung aufgesetzt ist. Auf dem Schaftabschnitt 16 sitzt ferner eine Gegenmasse 20, und der Scheibenstapel 12 und die Gegenmasse 20 sind durch einen Gewindering 22 gegen einen Flanschabschnitt 24 der Sonotrode 18 festgespannt.

Die Sonotrode 18 hat ferner einen vor dem Flanschabschnitt 24 liegenden Antriebsabschnitt 26, an dessen freiem Ende ein Umlenkring 28 angebracht ist. Dieser ist so ausgebildet, daß an einem von ihm getragenen ersten Anschlußabschnitt 30, der mit der Sonotrode 18 verbunden ist, und an einem hierzu um 90° versetzten zweiten Anschlußabschnitt 32 gleichzeitig Schwingungsbäuche erhalten werden. Der Anschlußabschnitt 32 trägt eine Spannzange 34, in welcher ein stabförmiges Ultraschall-Werkzeug 36 angebracht ist.

Die gesamte Anordnung ist in ein gestrichelt angedeutetes Gehäuse 38 integriert.

Zum Erzeugen eines Betriebsstromes für den Scheibenstapel 12 (bzw. eines anderen hochfrequente mechanische Schwingungen bereitstellenden Schwingungserzeugers, z.B. eines magnetostriktiven Elementes) und zur Einregelung konstanter Amplitude der Sonotrode 18 unabhängig von den Lastverhältnissen am Werkzeug 36 ist eine insgesamt mit 40 bezeichnete Betriebsschaltung vorgesehen. Diese umfaßt einen spannungsgesteuerten Oszillator (VCO) 42. Dessen Ausgangssignal wird zum Ansteuern eines schnellen Halbleiterschalters 44 verwendet, der z.B. ein Leistungstransistor wie ein MOSFET sein kann. Der schnelle Halbleiterschalter 44 zerhackt die von einer Gleichspannungsquelle 46 abgegebene Gleichspannung mit einer Frequenz, die dem Ultraschallbereich entspricht (z.B. etwa 25 kHz). Die so rechteckmodulierte Gleichspannung, deren Amplitude typischerweise zwischen 20 und 40 V liegen kann, wird auf einen Amplitudenübersetzer 48 gegeben. Es kann sich hierbei typischerweise um einen Transformator mit geeignetem Übersetzungsverhältnis (in der Praxis Faktor 2 bis 4) handeln.

Der vom Amplitudenübersetzer 48 abgegebene Strom wird durch einen Stromfühler 50 gemessen. Der Stromfühler 50 hat eine kurze Zeitkonstante, die dem Reziproken der Arbeitsfrequenz des steuerbaren Oszillators 42 entspricht oder kleiner ist als diese. Auf diese Weise ist der Ist-Wert des Speisestromes für den piezoelektrischen Scheibenstapel 12 mit hoher Zeitauflösung meßbar. Der vom Stromfühler 50 zum Scheibenstapel 12 fließende Strom läuft durch einen steuerbaren Schalter 52, der ebenfalls eine kurze Ansprechzeit aufweist, die mit dem Reziproken der Frequenz des Oszillators 42 vergleichbar ist oder kleiner als diese, zum Scheibenstapel 12 und von dort über eine Erdleitung 53 zurück.

Der steuerbare Schalter 52 ist normalerweise geschlossen und ist durch einen Widerstand 54 überbrückt, der den Speisestrom auf einen solchen Wert begrenzt, bei welchen weder am Scheibenstapel 12 noch an der Sonotrode 18 noch am Umlenkring 28 noch am Werkzeug 36 unzulässig hohe mechanische Belastungen auftreten, die zu einem Ermüdungsbruch führen könnten.

Wahlweise kann man den Widerstand 54 auch weglassen, so daß der Speisestrom unter noch zu schildernden Notfallbedingungen vollständig unterbrochen wird.

Die Ansteuerung des steuerbaren Schalters 52 erfolgt durch das Ausgangssignal eines Komparators 56, der am einen Eingang das Ausgangssignal des geringe Zeitkonstante aufweisenden Stromfühlers 50 und am anderen Eingang ein dem maximal zulässigen Strom zum Scheibenstapel 12 vorgebendes Sollwert-Signal erhält. Der Komparator 56 ist ebenfalls rasch, d.h. er hat eine Zeitkonstante, die dem Reziproken der Frequenz des Oszillators 42 entspricht oder kleiner ist als diese.

Auf die oben beschriebene Art und Weise ist gewährleistet, daß der Speisestrom zum Scheibenstapel 12 bei abrupter Lastverminderung innerhalb einer kurzen Zeitspanne, die dem Bruchteil einer Schwingungsamplitude oder einigen wenigen Schwingungsamplituden entspricht, auf einen unschädlichen Wert zurückgenommen wird.

Zur Gesamtsteuerung des Ultraschall-Handstückes 10 ist ein Prozessor 60 vorgesehen. Dieser arbeitet mit einem Display 62 zusammen, welches z.B. ein kleiner LCD-Schirm sein kann. Über ein Eingabefeld 64 können dem Prozessor 60 aktuelle Arbeitsdaten eingegeben werden, z.B. die Art des jeweils verwendeten Werkzeuges 36, die Art der durchgeführten Arbeit (polieren einer Zahnoberfläche, abrasives Abtragen von Konkrementen, bohren von Kavitäten) eingegeben werden kann. Der Prozessor 60 arbeitet mit einem Massenspeicher 66 zusammen, z.B. einem ROM, in welchem das Programm, nach welchem der Prozessor 60 arbeitet und charakteristische Daten für unterschiedliche Werkzeuge und unterschiedliche durchzuführende Arbeiten abgelegt sind.

Aus den im Massenspeicher 66 abgelegten Daten und den Eingaben am Eingabefeld 64 bestimmt der Prozessor Sollwerte für die gewünschte Arbeitsamplitude der Sonotrode 18 (und damit des Werkzeuges 30) und einen Sollwert für den Speisestrom, der im Betrieb nicht überschritten werden darf. Dieses Signal wird über einen D/A-Wandler 68 als Vergleichssignal auf den zweiten Eingang des schnellen Komparators 56 gegeben.

Der Prozessor 60 erzeugt ferner das Steuersignal für den spannungsgesteuerten Oszillator 42.

Das oben beschriebene Ultraschall-Handstück mit zugehöriger Betriebsschaltung arbeitet folgendermaßen:

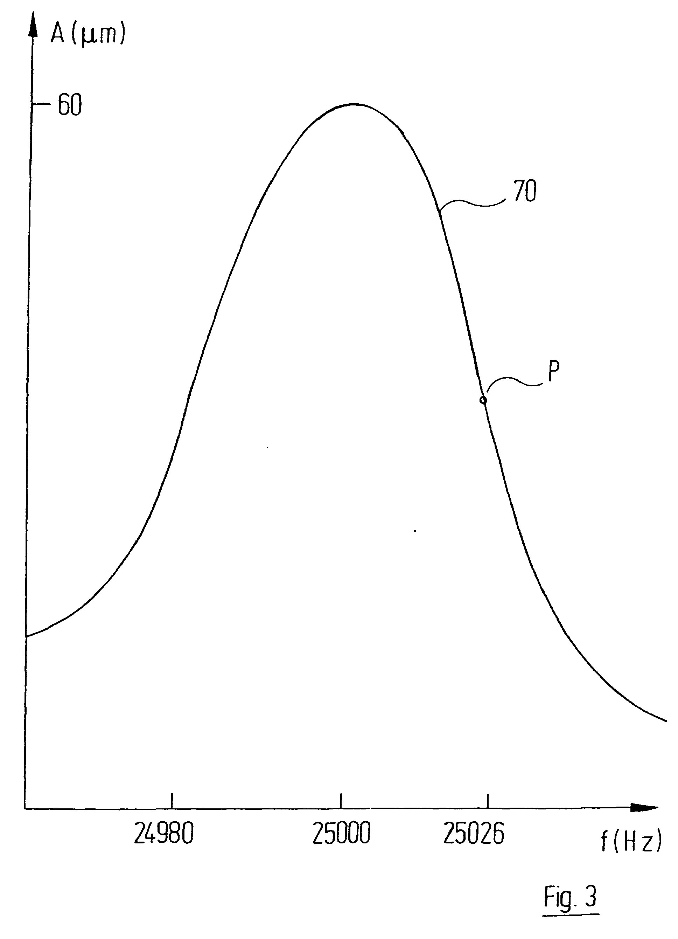

Nach Eingabe der Daten für das Werkzeug 36 und die durchzuführende Arbeit am Eingabefeld 64 bestimmt der Prozessor unter Berücksichtigung im Massenspeicher 66 abgelegter Daten eine Normal-Arbeitsfrequenz für den Oszillator 42. Diese ist so gewählt, daß man einen Arbeitspunkt (vgl. Figur 3) des schwingungsfähigen Gesamtsystems, welches durch die Betriebsschaltung 40, den Scheibenstapel 12, die Sonotrode 18, den Umlenkring 28 und das Werkzeug 36 gebildet ist, der auf der hochfrequenten Flanke der Resonanzkurve des Gesamtsystems liegt, welche in Figur 3 bei 70 gezeigt ist. Man erkennt, daß durch Erniedrigerung der Oszillatorfrequenz die Amplitude ausgehend vom Grund-Arbeitspunkt P vergrößert wird, während eine Frequenzerhöhung zu einer Verkleinerung der Amplitude führt.

Bei einem praktischen Ausführungsbeispiel kann das Maximum der Resonanzkurve bei etwa 25000 Hz liegen und die Halbwertsbreite der Resonanzkurve kann je nach Güte des Gesamtschwingungssystem zwischen 20 und 100 Hz liegen. Die bei Resonanz erhaltene maximale Amplitude kann bei 50 bis 100 µm liegen. Typische Arbeitsamplituden, die kurzfristig noch erhöht werden können betragen 30 bis 80 µm.

Der Prozessor 60 erhält nun an einem weiteren Eingang das Ausgangssignal des Stromfühlers 50. Dieses Signal wird über einen im Prozessor 60 enthaltenen A/D-Wandler 72 auf den einen Eingang eines Software-Regelkreises 74 gegeben, dessen anderer Eingang mit einem Soll-Strom-Signal beaufschlagt ist, welches der Prozessor 60 aus den Kenndaten für die jeweils durchzuführende Arbeit und den Werkzeugkenndaten abgeleitet hat.

Das Ausgangssignal des Regelkreises 74 stellt (ggf. nach Umsetzung in ein Analogsignal) das Steuersignal für den Oszillator 42 dar.

Ist das Werkzeug 36 nicht an zu bearbeitendes Gewebe angekoppelt, so erhöht sich wegen der nicht gegebenen Bedämpfung durch eine Last die Amplitude der Sonotode 18, was an einer entsprechenden Erhöhung des Speisestromes registriert werden kann, der durch den Scheibenstapel 12 fließt. Der Regelkreis 74 verändert nun das Steuersignal für den Oszillator 42 im Sinne einer Frequenzerhöhung, wodurch die Schwingungsamplitude gemäß der Resonanzkurve 70 von Figur 3 vermindert wird.

Wird das Werkzeug 36 belastet, indem es in Anlage an ein zu bearbeitendes Gewebe, z.B. einen Zahnbelag gebracht wird, so sinkt die Amplitude der Sonotrode 18 und damit auch der durch den Scheibenstapel 12 fließende Strom. Der Regelkreis 70 erkennt dies und ändert nun das Steuersignal für den Oszillator 42 im Sinne einer Erniedrigung der Oszillatorfrequenz. Hierdurch wird die Amplitude der Sonotrode 18 wieder angehoben, bis der gewünschte Amplituden-Sollwert erreicht ist.

Kommt es zu einem sehr raschen Lastwechsel für die Sonotrode 18, z.B. durch Bruch des Werkzeuges 36 oder eine sonstige rasche Änderung des akkustischen Widerstandes, so erkennt dies der Komparator 56 und öffnet unverzüglich (innerhalb eines Bruchteiles einer Periode oder einiger weniger Perioden den steuerbaren Schalter 52). Der Scheibenstapel 12 wird ab diesem Moment dann nur noch mit dem durch den Widerstand 54 vorgegebenen reduzierten Speisestrom bzw. gar nicht mehr mit Speisestrom beaufschlagt. Durch diese rasche Reduzierung des Speisestromes werden mechanische Beschädigungen des Ultraschall-Handstückes durch sehr kurzfristige Laständerungen vermieden.

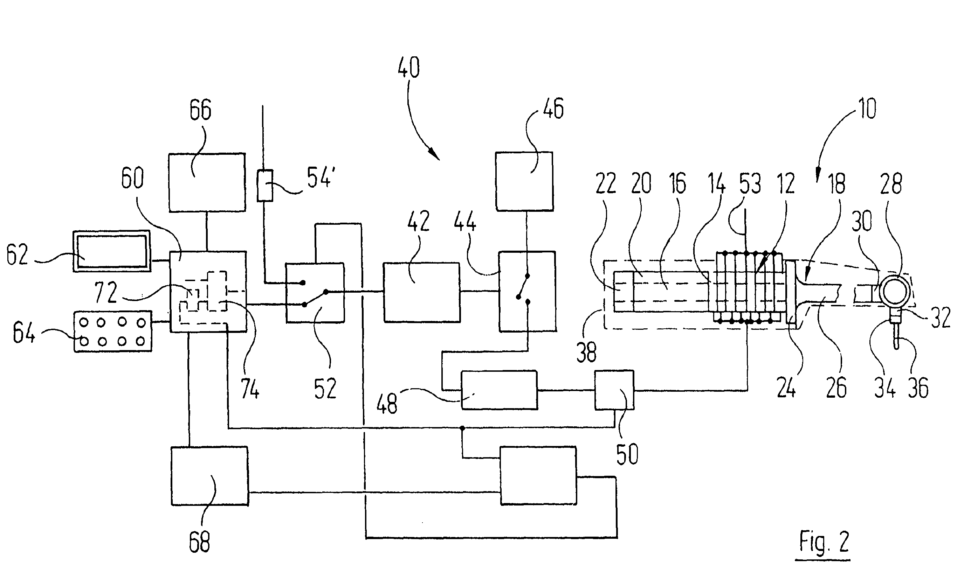

Beim abgewandelten Ausführungsbeispiel nach Figur 2 ist der steuerbare Schalter 52 nicht in die Zuleitung zu dem Scheibenstapel 12 eingefügt, sondern in die zum steuerbaren Oszillator 42 führende Steuerleitung, und als Umschalter ausgebildet. Er gibt bei Betätigung anstelle des am Ausgang des Prozessors 60 bereitgestellten veränderlichen Steuersignales ein Fest-Steuersignal (angedeutet durch einen Widerstand 54') auf den Oszillator 42, das so gewählt ist, daß auch bei Last null die Amplitude im zulässigen Bereich verbleibt.

Auf diese Weise ist das Steuersignal für den steuerbaren Oszillator 42 begrenzt, und man erhält analog eine rasche Begrenzung des Speisestromes bei abruptem Lastwechsel.

## Patentansprüche

1. Dentale Einrichtung zur Erzeugung vorzugsweise hochfrequenter mechanischer Schwingungen für ein dentales Handstück, mit einem Schwingungserzeuger (12), mit einem Oszillator (42) und einer diesem nachgeschalteten Leistungsstufe (44, 46, 48), wobei Mittel (50, 52) vorgesehen sind, welche den dem Schwingungserzeuger (12) zugeführten Speisestrom unterhalb eines vorgegebenen Maximalwertes halten und einen Stromfühler (50) aufweisen, dessen Ausgangssignal auf den einen Eingang eines Regelkreises (74) gegeben wird, welcher an einem zweiten Eingang ein Strom-Soll-Wert-Signal erhält und dessen Ausgang mit einer Steuerklemme des steuerbar ausgebildeten Oszillators (42) verbunden ist, **dadurch gekennzeichnet, daß** der Stromfühler (50) zwischen die Leistungsstufe (48) und dem Schwingungserzeuger (12) eingefügt ist.

2. Einrichtung nach Anspruch 1, **dadurch gekennzeichnet, daß** das Strom-Soll-Wert-Signal so gewählt ist, daß der Arbeitspunkt des schwingungsfähigen Gesamtsystemes aus Schwingungserzeuger (12) und mit diesem gekoppelter Last (18, 28, 36) auf einer Flanke der Resonanzkurve (70) des schwingungsfähigen Gesamtsystems liegt, vorzugsweise auf der hochfrequenten Flanke der Resonanzkurve.

3. Einrichtung nach Anspruch 1 oder 2, **dadurch gekennzeichnet, daß** der Stromfühler (50) eine der Periode des Oszillators (42) vergleichbare oder gegenüber dieser kürzeren Zeitkonstante aufweist.

4. Einrichtung nach einem der Ansprüche 1 bis 3, **dadurch gekennzeichnet, daß** in die von der Leistungsstufe (44, 46, 48) zum Schwingungserzeuger (12) führende Leitung ein Strombegrenzungskreis (52) eingefügt ist.

5. Einrichtung nach Anspruch 4, **dadurch gekennzeichnet, daß** der Strombegrenzungskreis einen normalerweise geschlossenen Schalter (52) aufweist, der durch das Ausgangssignal eines Komparators (56) angesteuert wird, der mit dem Ausgangssignal eines bzw. des zwischen den Ausgang der Leistungsstufe (44, 46, 48) und den Schwingungserzeuger (12) eingefügten Stromfühlers (50) und einem Maximalstrom-Signal (68) beaufschlagt ist, wobei der Stromfühler (50) und der Komparator (56) mit der Periode des Oszillators (42) vergleichbare oder demgegenüber kleinere Zeitkonstante aufweist.

6. Einrichtung nach einem der Ansprüche 1 bis 5, **dadurch gekennzeichnet, daß** die Steuerklemme des steuerbaren Oszillators (42) über einen Schalter (52) mit einem Fest-steuersignal (54') beaufschlagbar ist, der durch das Ausgangssignal eines Komparators (56) angesteuert wird, der mit dem Ausgangssignal eines bzw. des zwischen den Ausgang der Leistungstufe (46) bis (48) und den Schwingungserzeuger (12) eingefügten Stromfühlers (50) und einer Maximalstrom-Signal beaufschlagt ist, wobei der Stromfühler (50) und der Komparator (56) mit der Periode des Oszillators (42) vergleichbare oder demgegenüber kleinere Zeitkonstante aufweist.

## Claims

1. A dental device for generating preferably high-frequency mechanical vibrations for a dental handpiece, with a vibration generator (12), with an oscillator (42) and a power stage (44, 46, 48) connected downstream of said oscillator, wherein means (50, 52) are provided, which keep the supply current supplied to the vibration generator (12) below a predetermined maximum value and which comprise a current detector (50) whose output signal is supplied to one input of a control circuit (74), which receives a current nominal value signal at a second input and whose output is connected to a control terminal of the controllable oscillator (42), **characterized in that** the current detector (59) is fitted between the power stage (48) and the vibration generator (12).

2. A device as claimed in claim 1, **characterized in that** the current nominal value signal is selected in such a manner that the operating point of the overall vibratory system formed by the vibration generator (12) and load (18, 28, 36) coupled therewith lies on a flank of the resonance curve (70) of the overall vibratory system, preferably on the high-frequency flank of the resonance curve.

3. A device as claimed in one of claims 1 or 2, **characterized in that** the current detector (50) has a time constant which is comparable with or shorter than the cycle of the oscillator (42).

4. A device as claimed in one of claims 1 to 3, **characterized in that** a current limiting circuit (52) is fitted in the line leading from the power stage (44, 46, 48) to the vibration generator (12).

5. A device as claimed in claim 4, **characterized in that** the current limiting circuit comprises a normally closed switch (52), which is actuated by the output signal of a comparator (56), which is acted upon by the output signal of a/the current detector (50) fitted between the output of the power stage (44, 46, 48) and the vibration generator (12) and by a maximum current signal (68), the current detector (50) and the comparator (56) having time constants comparable with or less than the cycle of the oscillator (42).

6. A device as claimed in one of claims 1 to 5, **characterized in that** the control terminal of the controllable oscillator (42) can be acted upon via a switch (52) by a fixed control signal (54'), which is actuated by the output signal of a comparator (56), which is acted upon by the output signal of a/the current detector (50) fitted between the output of the power stage (46) to (48) and the vibration generator (12) and by a maximum current signal, the current detector (50) and the comparator (56) having time constants comparable with or less than the cycle of the oscillator (42).

## Revendications

1. Dispositif dentaire pour générer des vibrations mécaniques de préférence à haute fréquence pour une pièce à main dentaire, avec un générateur de vibrations (12), avec un oscillateur (42) et un étage de puissance (44, 46, 48) placé à la suite de celui-ci, des moyens (50, 52) étant prévus qui maintiennent le courant d'alimentation amené au générateur de vibrations (12) au-dessous d'une valeur maximale prédéfinie et présentent un capteur de courant (50) dont le signal de sortie est amené à une entrée d'un circuit de régulation (74) qui reçoit à une deuxième entrée un signal de valeur de consigne de courant et dont la sortie est reliée à une borne de commande de l'oscillateur (42) conçu de manière à pouvoir être commandé, **caractérisé en ce que** le capteur de courant (50) est inséré entre l'étage de puissance (48) et le générateur de vibrations (12).

2. Dispositif selon la revendication 1, **caractérisé en ce que** le signal de valeur de consigne de courant est choisi de manière que le point de fonctionnement du système vibrant complet composé du générateur de vibrations (12) et de la charge (18, 28, 36) couplée à celui-ci se situe sur un flanc de la courbe de résonance (70) du système vibrant complet, de préférence sur le flanc à haute fréquence de la courbe de résonance.

3. Dispositif selon la revendication 1 ou 2, **caractérisé en ce que** le capteur de courant (50) présente une constante de temps comparable à la période de l'oscillateur (42) ou plus courte que celle-ci.

4. Dispositif selon l'une des revendications 1 à 3, **caractérisé en ce qu'**un circuit de limitation de courant (52) est inséré dans la ligne conduisant de l'étage de puissance (44, 46, 48) au générateur de vibrations (12).

5. Dispositif selon la revendication 4, **caractérisé en ce que** le circuit de limitation de courant présente un commutateur (52) normalement fermé qui est commandé par le signal de sortie d'un comparateur (56) qui est soumis au signal de sortie d'un ou du capteur de courant (50) inséré entre la sortie de l'étage de puissance (44, 46, 48) et le générateur de vibrations (12) et à un signal de courant maximal (68), le capteur de courant (50) et le comparateur (56) présentant une constante de temps comparable à la période de l'oscillateur (42) ou plus petite que celle-ci.

6. Dispositif selon l'une des revendications 1 à 5, **caractérisé en ce que** la borne de commande de l'oscillateur commandable (42) est soumise par l'intermédiaire d'un commutateur (52) à un signal de commande fixe (54') qui est commandé par le signal de sortie d'un comparateur (56) qui est soumis au signal de sortie d'un ou du capteur de courant (50) inséré entre la sortie de l'étage de puissance (46) à (48) et le générateur de vibrations (12) et à un signal de courant maximal, le capteur de courant (50) et le comparateur (56) présentant une constante de temps comparable à la période de l'oscillateur (42) ou plus petite que celle-ci.
